# EUROPÄISCHE PATENTSCHRIFT

(11) **EP 3 814 742 B1**
(45) Veröffentlichungstag und Bekanntmachung des Hinweises auf die Patenterteilung: **26.07.2023**
(21) Anmeldenummer: 19742676.0
(22) Anmeldetag: 18.06.2019
(51) Int. Cl.: G01N 3/40, B23Q 17/09

(54) **VERFAHREN ZUM PRÜFEN ZUMINDEST EINES TEILBEREICHS EINES BAUTEILS UND PRÜFVORRICHTUNG ZUM PRÜFEN ZUMINDEST EINES TEILBEREICHS EINES BAUTEILS**
METHOD FOR CHECKING AT LEAST ONE SUBREGION OF A COMPONENT AND CHECKING DEVICE FOR CHECKING AT LEAST ONE SUBREGION OF A COMPONENT
PROCÉDÉ DE CONTRÔLE D'AU MOINS UNE PARTIE D'UNE PIÈCE ET DISPOSITIF DE CONTRÔLE SERVANT AU CONTRÔLE D'AU MOINS UNE PARTIE D'UNE PIÈCE

(30) Priorität: 27.06.2018 DE 102018210463
(43) Veröffentlichungstag der Anmeldung: 05.05.2021
(73) Patentinhaber: MTU Aero Engines AG, 80995 München (DE)
(72) Erfinder: ECKSTEIN, Martin, 82178 Puchheim (DE); PFIRRMANN, Daniel, 80796 München (DE); BUßMANN, Martin, 85247 Schwabhausen (DE); BAMBERG, Joachim, 85221 Dachau (DE)
(86) Internationale Anmeldenummer: PCT/DE2019/000163
(87) Internationale Veröffentlichungsnummer: WO 2020/001672

(56) Entgegenhaltungen:
- DE-A1- 10 051 254
- JP-A- 2016 175 147
- US-A- 5 333 494
- US-A1- 2004 067 116
- TETI R ET AL: "Advanced monitoring of machining operations", CIRP ANNALS, ELSEVIER BV, NL, CH, FR, Bd. 59, Nr. 2, 1. Januar 2010 (2010-01-01) , Seiten 717-739, XP027205232, ISSN: 0007-8506 [gefunden am 2010-07-01]
- GEORGINA DEL CARMEN MOTA-VALTIERRA ET AL: "ANN Based Tool Condition Monitoring System for CNC Milling Machines", INGENIERÍA, INVESTIGACIÓN Y TECNOLOGÍA, 1. Oktober 2011 (2011-10-01), Seiten 461-468, XP055625755, DOI: 10.22201/fi.25940732e.2011.12n4.045

## Beschreibung

Die Erfindung betrifft ein Verfahren zum Prüfen zumindest eines Teilbereichs eines Bauteils, insbesondere eines Bauteils einer Strömungsmaschine. Ein weiterer Aspekt der Erfindung betrifft eine Prüfvorrichtung zum Prüfen zumindest eines Teilbereichs eines Bauteils.

Unerkannte Materialfehler in Bauteilen können mitunter verheerende Folgen haben, insbesondere bei Bauteilen von Strömungsmaschinen, wie beispielsweise Flugtriebwerken. Aus dem Stand der Technik ist es bekannt, Bauteile zur Detektion von Materialfehlern beispielsweise einer Ultraschallprüfung zu unterziehen, um beispielsweise als Lunker ausgebildete Materialfehler zu erkennen. Allerdings kann es vorkommen, dass durch derzeit bekannte Verfahren zur Ultraschallprüfung manche Materialfehler im Bauteil unerkannt bleiben. Aus diesem Grund werden häufig aufwändige Verfahren, zu welchen beispielsweise eine Ätzprüfung zur Detektion von als Seigerungen ausgebildeten Materialfehlern gehört, durchgeführt.

Mit dem Begriff Seigerung werden Entmischungen einer Metalllegierungsschmelze beim Übergang der Schmelze in den festen Zustand bezeichnet, die zu einer örtlichen Zu- und/oder Abnahme von bestimmten Elementen innerhalb des Mischkristalls der Metalllegierung führen. Durch Seigerungen ergeben sich daher lokal unterschiedliche Werkstoffeigenschaften innerhalb eines Bauteils. Beispielsweise sind in Bauteilen von Strömungsmaschinen wie etwa Triebwerksscheiben aus Nickelbasis-Legierungen sogenannte "Dirty White Spots" bekannt, die im Betrieb des Triebwerks durch langeinwirkende Low Cycle Fatigue-Belastungen zu Rissbildungen bis hin zum Versagen des Bauteils führen können. Der Begriff "Low Cycle Fatigue" ist auch unter der Bezeichnung Niedriglastwechselermüdung bekannt.

DE 100 51 254 A1 offenbart ein Verfahren zum Prüfen zumindest eines Teilbereichs eines Bauteils, sowie eine Prüfmaschine hierzu. Weitere Verfahren und Prüfmaschinen sind in JP 2016 175147 A, US 2004/067116 A1, TETI R ET AL: "Advanced monitoring of machining operations", CIRP ANNALS, ELSEVIER BV, NL, CH, FR, Bd. 59, Nr. 2, 1. Januar 2010 (2010-01-01), Seiten 717-739, ISSN: 0007-8506, GEORGINA DEL CARMEN MOTA-VALTIERRA ET AL: "ANN Based Tool Condition Monitoring System for CNC Milling Machines", INGENIERÍA, INVESTIGACIÓN Y TECNOLOGÍA, 1. Oktober 2011 (2011-10-01), Seiten 461-468, DOI: 10.22201/fi.25940732e.2011.12n4.045, und US 5 333 494 A offenbart.

Aufgabe der vorliegenden Erfindung ist es, ein Verfahren der eingangs genannten Art zu schaffen, durch welches eine aufwandsarme Prüfung von im Inneren eines Bauteils enthaltenen Materialfehlern ermöglicht ist. Eine weitere Aufgabe der Erfindung ist es, eine Prüfvorrichtung zum Prüfen auf im Inneren eines Bauteils enthaltene Materialfehler zu schaffen.

Diese Aufgaben werden erfindungsgemäß durch ein Verfahren mit den Merkmalen des Patentanspruchs 1 sowie durch eine Prüfvorrichtung mit den Merkmalen des Patentanspruchs 10 gelöst.

Vorteilhafte Ausgestaltungen mit zweckmäßigen Weiterbildungen der Erfindung sind in den jeweiligen Unteransprüchen angegeben.

Ein erster Aspekt der Erfindung betrifft ein Verfahren zum Prüfen zumindest eines Teilbereichs eines Bauteils, insbesondere eines Bauteils einer Strömungsmaschine, gemäß Anspruch 1. Das Verfahren umfasst zumindest die Schritte:
a) Bereitstellen eines Rohbauteils;
b) Herstellen zumindest des Teilbereichs aus dem Rohbauteil durch spanende Bearbeitung des Rohbauteils mittels zumindest eines Werkzeugs und Erfassen wenigstens eines Kraftverlaufs zumindest einer während der spanenden Bearbeitung auf das zumindest eine Werkzeug wirkenden Kraft durch wenigstens einen Kraftsensor;
c) Prüfen, ob wenigstens eine Abweichung des wenigstens einen Kraftverlaufs von zumindest einem vorbestimmten Sollverlauf des mindestens einen Kraftverlaufs vorliegt, wobei die wenigstens eine Abweichung zumindest einen in einem unbearbeiteten Segment des Teilbereichs enthaltenen Materialfehler charakterisiert. Der Sollverlauf kann dabei ebenfalls die spanende Bearbeitung des Teilbereichs charakterisieren. Es ist klar, dass durch das Verfahren auch mehrere Materialfehler, welche auch als Fehlstellen bezeichnet werden können, erkannt werden können. Das Verfahren ermöglicht insgesamt eine Güteprüfung bei (also während) der spanenden Bearbeitung, welche auch als zerspanende Bearbeitung bezeichnet werden kann. Durch das Verfahren kann bei der zerspanenden Bearbeitung unter Herstellen zumindest des Teilbereichs aus dem Rohbauteil beispielsweise eine Anzahl an Fehlstellen erkannt werden, wodurch eine besonders aussagekräftige Bewertung einer Bauteilqualität erfolgen kann. Unabhängig davon kann durch das Verfahren bei der zerspanenden Bearbeitung unter Herstellen zumindest des Teilbereichs aus dem Rohbauteil beispielsweise eine Größe der Fehlstelle bzw. der Fehlstellen erkannt werden, wodurch die Bauteilqualität besonders genau bewertet werden kann. Unabhängig davon kann durch das Verfahren bei der zerspanenden Bearbeitung unter Herstellen zumindest des Teilbereichs aus dem Rohbauteil beispielsweise eine Lage der Fehlstelle bzw. der Fehlstellen erkannt werden, wodurch besonders genaue Aussagen über die Bauteilqualität ermöglicht sind. Der zumindest eine Materialfehler kann allgemein ein bei der Durchführung von Schritt b) von dem Werkzeug beabstandeter, in dem Rohbauteil (innerhalb des Rohbauteils) enthaltener Materialfehler sein. Ein besonderer Vorteil des Verfahrens liegt darin, dass das Herstellen des Teilbereichs (Schritt b) erfolgen und währenddessen der Kraftverlauf ermittelt werden kann, wobei der Kraftverlauf in Schritt c) beim Prüfen verwendet wird. Somit kann das spanende Bearbeiten und das Erfassen des für das Prüfen in Schritt c) verwendeten Kraftverlaufs parallelisiert und damit Zeit gespart werden, wodurch die Prüfung insgesamt besonders aufwandsarm erfolgen kann. Durch Parallelisieren der Schritte b) und c) kann das Prüfen sozusagen als "Online-Diagnose" bei der spanenden Bearbeitung, also beim Zerspanen erfolgen. Das Bauteil kann beispielsweise als Schmiedebauteil ausgebildet sein. Im Rahmen der Erfindung ist unter dem Begriff "Materialfehler" ein fehlerhaftes Teilvolumen des Rohbauteils bzw. des Teilbereichs zu verstehen.

Die wenigstens eine Abweichung kann bevorzugt zumindest eine Seigerung als den zumindest einen Materialfehler charakterisieren. Dies ist von besonderem Vorteil, da somit eine aus dem Stand der Technik bekannte, mit einer Zerstörung des Bauteils einhergehende Prüfung entfallen könnte. Stattdessen kann der als Seigerung ausgebildete Materialfehler durch das Verfahren detektiert werden.

Das Rohbauteil kann vor dessen Bereitstellen gemäß Schritt a) einer Ultraschallprüfung unterzogen werden. Werden bei der Ultraschallprüfung bereits schwerwiegende Fehlstellen bzw. Materialfehler festgestellt, so kann das Rohbauteil sofort als Ausschuss deklariert und durch ein anderes Rohbauteil ersetzt werden, wodurch Zeit gespart werden kann.

In einer vorteilhaften Weiterbildung der Erfindung wird Schritt c) während des Herstellens des zumindest einen Teilbereichs aus dem Rohbauteil gemäß Schritt b) durchgeführt. Dies ist von Vorteil, da die Schritte b) und c) somit durchgeführt werden können, ohne dass die spanende Bearbeitung beim Prüfen unterbrochen werden muss oder mit dem Prüfen bis zu einem Abschluss der spanenden Bearbeitung gewartet werden muss. Dadurch ist insgesamt sowohl die Herstellung des Teilbereichs als auch das Prüfen zumindest weitgehend gleichzeitig ausführbar, was zu einer erheblichen Zeitersparnis führt.

Es wird in Schritt c) der wenigstens eine Kraftverlauf mit zumindest einem weiteren Kraftverlauf, welcher eine spanende Bearbeitung zumindest eines weiteren Bauteils charakterisiert, verglichen und dadurch die wenigstens eine Abweichung in dem zumindest einen Teilbereich bewertet, wobei das zumindest eine weitere Bauteil wenigstens einen im Vergleich zu dem zumindest einen Materialfehler gleichartigen, weiteren Materialfehler aufweist, und wobei wenigsten eine weitere Abweichung des zumindest einen weiteren Kraftverlaufs von dem zumindest einen vorbestimmten Sollverlauf vorliegt. Dies ist von Vorteil, da hierdurch eine besonders aussagekräftige Bewertung des Materialfehlers anhand des zumindest einen weiteren Kraftverlaufs (des zumindest einen weiteren Bauteils) erfolgen kann. Vorzugsweise wird zur Bewertung des zumindest einen Materialfehlers eine Mehrzahl an weiteren Kraftverläufen einer entsprechenden Mehrzahl an weiteren Bauteilen herangezogen, sodass eine statistisch abgesicherte Bewertung erfolgen kann. Beim "Bewerten" kann beispielsweise analysiert werden, ob der wenigstens eine Materialfehler derart gravierend ist, dass das Bauteil als Ausschuss gilt oder ob der wenigstens eine Materialfehler tolerierbar ist und das Bauteil somit für dessen bestimmungsgemäßen Gebrauch geeignet ist. Das weitere Bauteil kann zeitlich vor dem Bauteil hergestellt sein und in diesem Falle auch als historisches Bauteil bezeichnet werden. Das weitere Bauteil kann mittels desselben oder zumindest eines gleichartigen Werkzeugs der spanenden Bearbeitung unterzogen worden sein. Dadurch dass das weitere Bauteil den gleichartigen, weiteren Materialfehler aufweist, liegt bei dem weiteren Bauteil eine Kontamination mit dem weiteren Materialfehler vor. Das weitere Bauteil kann dabei mit dem zumindest einen, gleichartigen weiteren Materialfehler dotiert sein. Das weitere Bauteil kann durch das erfindungsgemäße Verfahren aus einem weiteren, den weiteren Materialfehler aufweisenden, Rohbauteil hergestellt und dabei der weitere Kraftverlauf ermittelt werden. Beispielsweise kann es sich bei dem Bauteil und dem weiteren Bauteil um jeweilige, gleichartige Triebwerksscheiben, Turbinenscheiben oder Bliske handeln, welche jeweils durch das Verfahren hergestellt werden, bzw. sind.

Weiterhin wird durch Vergleichen des wenigstens einen Kraftverlaufs mit dem zumindest einen weiteren Kraftverlauf eine Position des zumindest einen Materialfehlers in dem unbearbeiteten Segment zumindest näherungsweise bestimmt. Dies ist von Vorteil, da hiernach bestimmt wird, ob sich der Materialfehler beim bestimmungsgemäßen Gebrauch des Bauteils in einem hochbelasteten Bauteilbereich oder in einem niedrigbelasteten Bauteilbereich befindet. Befindet sich der Materialfehler in dem hochbelasteten Bauteilbereich, so kann das Bauteil als Ausschuss bewertet, also mit anderen Worten als für den bestimmungsgemäßen Gebrauch ungeeignet bewertet werden. Befindet sich der Materialfehler in dem niedrigbelasteten Bauteilbereich, so kann das Bauteil als tolerierbar, also für den bestimmungsgemäßen Gebrauch geeignet bewertet werden. Durch die zumindest näherungsweise Bestimmung der Position kann somit eine gegebenenfalls unnötige Kennzeichnung des Bauteils als Ausschuss vermieden werden.

In einer weiteren vorteilhaften Weiterbildung der Erfindung wird die wenigstens eine Abweichung in dem zumindest einen Teilbereich unter Verwendung zumindest eines Kraftverlaufsgradienten des wenigstens einen Kraftverlaufs und/oder des zumindest einen weiteren Kraftverlaufs bewertet. Dies ist von Vorteil, da der Kraftverlaufsgradient beispielsweise zur Bewertung von den Materialfehler charakterisierenden Materialfehler-Parametern, beispielsweise einer Härte, einer Sprödigkeit und/oder einer Größe des Materialfehlers, herangezogen werden kann. Dies trägt zur genaueren Bewertung des Materialfehlers bei. Die Kraftverlaufsgradienten des wenigstens einen Kraftverlaufs und des zumindest einen weiteren Kraftverlaufs können hierzu miteinander verglichen werden. Dadurch können Steigungsunterschiede zwischen den jeweiligen Kraftverlaufsgradienten bestimmt und auf die Materialfehler-Parameter rückgeschlossen werden.

In einer weiteren vorteilhaften Weiterbildung der Erfindung ist der zumindest eine Kraftverlaufsgradient des wenigstens einen Kraftverlaufs und/oder des zumindest einen weiteren Kraftverlaufs zeitabhängig und/oder ortsabhängig. Dies ist von Vorteil, da hierdurch eine Ortsabhängigkeit bzw. Zeitabhängigkeit des Kraftverlaufsgradienten herangezogen wird womit eine besonders aussagekräftige Prüfung erfolgen kann. Ist der Kraftverlaufsgradient zeitabhängig und ortsabhängig, so kann eine Geschwindigkeitsabhängigkeit des Kraftverlaufsgradienten herangezogen werden.

In einer weiteren vorteilhaften Weiterbildung der Erfindung wird zumindest eine, durch schichtweisen Materialabtrag von dem Rohbauteil bei der spanenden Bearbeitung bewirkte Steigungsänderung des zumindest einen Kraftverlaufsgradienten herangezogen, um die wenigstens eine Abweichung zu bewerten. Dies ist von Vorteil, da hierdurch beispielsweise bewertet werden kann, welchen Abstand der Materialfehler von einer mittels des Werkzeugs spanend bearbeiteten Oberfläche des Rohbauteils aufweist. Der Abstand kann auch als Tiefe des Materialfehlers bezeichnet werden, in welcher der Materialfehler liegt. Bei dem schichtweisen Materialabtrag von dem Rohbauteil bei der spanenden Bearbeitung kann ein mehrmaliges Überfahren des in dem Rohbauteil vorliegenden Materialfehlers erfolgen, wobei anhand der Kraftverlaufsänderung beispielsweise eine Bewertung eines Materialfehlervolumens des Materialfehlers erfolgen kann. Das Materialfehlervolumen kann eine räumliche Erstreckung des Materialfehlers charakterisieren. Dies ermöglicht eine zuverlässige Bewertung, ob der Materialfehler tolerierbar ist, oder nicht.

In einer weiteren vorteilhaften Weiterbildung der Erfindung wird der zumindest eine weitere Kraftverlauf zeitlich vor dem wenigstens einen Kraftverlauf ermittelt. Dies ist von Vorteil, da der zumindest eine weitere Kraftverlauf somit zumindest als Teil eines Erfahrungsdatensatzes bereits vor der Ermittlung des wenigstens einen Kraftverlaufs im Rahmen des Verfahrens bereitgestellt werden kann, was zu einer schnelleren Durchführung des gesamten Verfahrens beitragen kann.

In einer weiteren vorteilhaften Weiterbildung der Erfindung wird die Prüfung in Schritt c) mittels eines künstlichen neuronalen Netzes, insbesondere durch ein Deep Learning-Verfahren durchgeführt. Künstliche neuronale Netze sind Netze aus künstlichen Neuronen und eignen sich besonders gut zur Prüfung der Abweichung. Beim Deep Learning erlernt ein Computermodell die Durchführung von Klassifikationsaufgaben direkt aus der Abweichung oder mehreren Abweichungen. Das verwendete Deep Learning-Modell kann gegebenenfalls zunächst anhand umfangreicher Sätze klassifizierter Daten und anhand neuronaler Netzarchitekturen trainiert werden.

In einer weiteren vorteilhaften Weiterbildung der Erfindung wird als die zumindest eine Kraft zumindest eine Schnittkraft herangezogen, welche während der spanenden Bearbeitung auf das zumindest eine Werkzeug wirkt. Dies ist von Vorteil, da die Schnittkraft eine besonders zuverlässige Prüfung ermöglicht, ob die Abweichung vorliegt. Darüber hinaus resultiert die Schnittkraft aus einem unmittelbaren Kontakt des Werkzeugs bzw. zumindest einer Werkzeugschneide des Werkzeugs mit dem Rohbauteil bei der spanenden Bearbeitung, sodass Störeinflüsse zumindest weitgehend unterbunden werden können.

In einer weiteren vorteilhaften Weiterbildung der Erfindung wird als das zumindest eine Werkzeug ein Fräswerkzeug oder ein Drehwerkzeug verwendet. Dies ist von Vorteil, da durch ein Fräswerkzeug oder ein Drehwerkzeug nicht nur eine besonders genaue spanende Bearbeitung, sondern auch eine besonders aufwandsarmes Erfassen des Kraftverlaufs erfolgen kann. Das Fräswerkzeug kann beispielsweise ein Schaftfräser und das Drehwerkzeug beispielsweise ein Drehmeißel sein.

Ein zweiter Aspekt der Erfindung betrifft eine Prüfvorrichtung gemäß Anspruch 10 zum Prüfen zumindest eines Teilbereichs eines Bauteils, insbesondere eines Bauteils einer Strömungsmaschine. Die Prüfvorrichtung ist dazu eingerichtet, bei einem Herstellen des zumindest einen Teilbereichs aus einem Rohbauteil durch spanende Bearbeitung des Rohbauteils mittels zumindest eines Werkzeugs wenigstens einen Kraftverlauf zumindest einer während der spanenden Bearbeitung auf das zumindest eine Werkzeug wirkenden Kraft charakterisierende Kraftverlaufs-Sensorsignale von wenigstens einem Kraftsensor zu empfangen. Zudem ist die Prüfvorrichtung dazu eingerichtet, anhand der den wenigstens einen Kraftverlauf charakterisierenden Kraftverlaufs-Sensorsignale zu prüfen, ob wenigstens eine Abweichung des wenigstens einen Kraftverlaufs von zumindest einem vorbestimmten Sollverlauf des mindestens einen Kraftverlaufs vorliegt, wobei die wenigstens eine Abweichung zumindest einen in einem unbearbeiteten Segment des Teilbereichs enthaltenen Materialfehler charakterisiert. Der wenigstens eine Kraftverlauf wird mit zumindest einem weiteren Kraftverlauf, welcher eine spanende Bearbeitung zumindest eines weiteren Bauteils charakterisiert, verglichen und dadurch die wenigstens eine Abweichung in dem zumindest einen Teilbereich bewertet, wobei das zumindest eine weitere Bauteil wenigstens einen im Vergleich zu dem zumindest einen Materialfehler gleichartigen, weiteren Materialfehler aufweist, und wobei wenigstens eine weitere Abweichung des zumindest einen weiteren Kraftverlaufs von dem zumindest einen vorbestimmten Sollverlauf vorliegt und wobei durch Vergleichen des wenigstens einen Kraftverlaufs mit dem zumindest einen weiteren Kraftverlauf eine Position des zumindest einen Materialfehlers in dem unbearbeiteten Segment zumindest näherungsweise bestimmt wird. Hiernach wird beurteilt, ob sich der Materialfehler beim bestimmungsgemäßen Gebrauch des Bauteils in einem hochbelasteten Bauteilbereich oder in einem niedrigbelasteten Bauteilbereich befindet.

Die erfindungsgemäße Prüfvorrichtung ermöglicht damit eine aufwandsarme Prüfung von im Inneren eines Bauteils enthaltenen Materialfehlern. Die Prüfvorrichtung kann eine Prozessoreinrichtung aufweisen, die zumindest aus einem Mikroprozessor und/oder einem Mikrocontroller besteht. Des Weiteren kann die Prozessoreinrichtung Programmcode aufweisen, der dazu eingerichtet ist, bei Ausführen durch die Prozessoreinrichtung zumindest einige Verfahrensschritte des Verfahrens oder zumindest eine Ausführungsform des Verfahrens gemäß dem ersten Erfindungsaspekt durchzuführen. Der Programmcode kann in einem mit der Prozessoreinrichtung gekoppelten Datenspeicher gespeichert sein. Die Prüfvorrichtung kann den wenigstens einen Kraftsensor umfassen, wobei die Kraftverlaufs-Sensorsignale auch beispielsweise mit der Prozessoreinrichtung empfangbar und auswertbar sind. Die Prüfvorrichtung kann auch das zumindest eine Werkzeug umfassen. Darüber hinaus kann die Prüfvorrichtung auch eine Antriebsvorrichtung zum Betreiben des Werkzeugs umfassen. Die Antriebsvorrichtung kann das Werkzeug zur spanenden Bearbeitung antreiben und steuern. Die im Zusammenhang mit dem erfindungsgemäßen Verfahren gemäß dem ersten Aspekt der Erfindung vorgestellten Merkmale sowie deren Vorteile gelten entsprechend für die erfindungsgemäße Prüfvorrichtung gemäß dem zweiten Aspekt der Erfindung und umgekehrt.

In einer vorteilhaften Weiterbildung der Erfindung umfasst die Prüfvorrichtung eine Anzeigeeinrichtung zum Anzeigen zumindest der wenigstens einen Abweichung des wenigstens einen Kraftverlaufs von dem zumindest einen vorbestimmten Sollverlauf. Vorzugsweise ist die gesamte Prüfvorrichtung als tragbares Gerät, vorzugsweise mit eigener Stromversorgung, ausgebildet, so dass zumindest das Empfangen der Kraftverlaufs-Sensorsignale, das Prüfen anhand des Kraftverlaufs und das Anzeigen zumindest der Abweichung ohne zusätzliche Hilfsmittel direkt am Bauteil erfolgen kann.

Es zeigt:

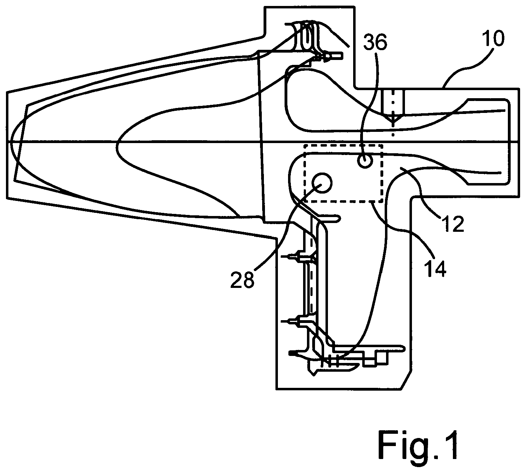

- Fig. 1: eine schematische Darstellung eines Bauteils für eine Strömungsmaschine, sowie eines Rohbauteils, aus welchem zumindest ein Teilbereich des Bauteils durch spanende Bearbeitung herstellbar ist;

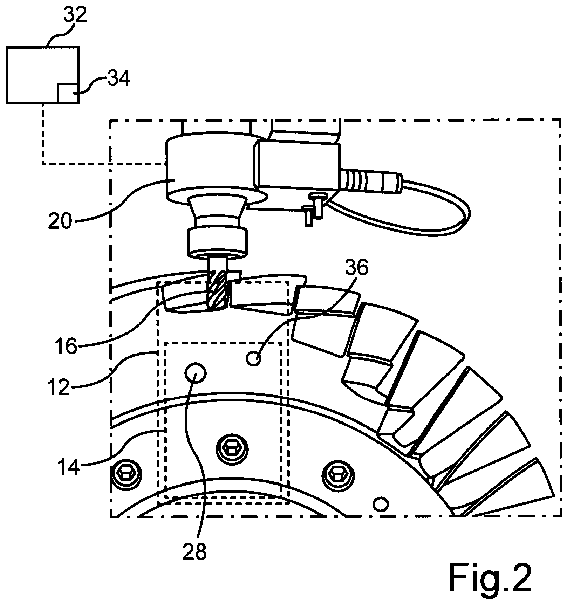

- Fig. 2: eine ausschnittsweise Darstellung der Herstellung des Teilbereichs des Bauteils durch spanende Bearbeitung mittels eines als Fräswerkzeug ausgebildeten Werkzeugs, wobei mittels einer schematisch dargestellten Prüfvorrichtung eine Prüfung auf in einem unbearbeiteten Segment des Teilbereichs enthaltene Materialfehler erfolgt; und

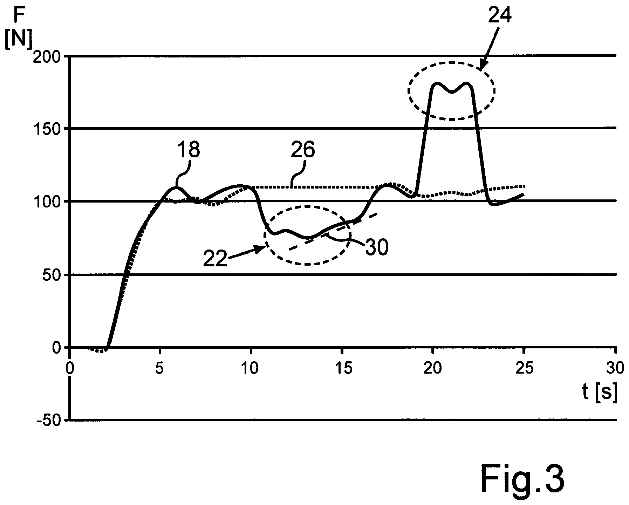

- Fig. 3: ein Diagramm, welches einen Kraftverlauf einer während der spanenden Bearbeitung auf das Werkzeug wirkenden Kraft, einen vorbestimmten Sollverlauf des mindestens einen Kraftverlaufs sowie verschiedene Abweichungen des Kraftverlaufs von dem Sollverlauf zeigt, wobei die Abweichungen verschiedene in dem unbearbeiteten Segment des Teilbereichs enthaltene Materialfehler charakterisieren.

FIG. 1 zeigt eine schematische Darstellung eines Rohbauteils 10, welches eine Rohbauteil-Außenkontur aufweist. Die Rohbauteil-Außenkontur stellt eine Außenkontur des Rohbauteils 10 vor einer spanenden Bearbeitung durch ein beispielsweise als Fräswerkzeug ausgebildetes Werkzeug 16, welches exemplarisch in FIG. 2 gezeigt ist, dar.

Fig. 2 verdeutlicht exemplarisch ein Verfahren zum Prüfen zumindest eines, in Fig. 1 und Fig. 2 gezeigten Teilbereichs 12 eines Bauteils einer Strömungsmaschine, bei welchem in einem Schritt a) zunächst ein Bereitstellen des Rohbauteils 10 erfolgt. In einem Schritt b) erfolgt ein Herstellen zumindest des Teilbereichs 12 aus dem Rohbauteil 10 durch spanende Bearbeitung des Rohbauteils 10 mittels des Werkzeugs 16 und Erfassen wenigstens eines Kraftverlaufs 18 zumindest einer während der spanenden Bearbeitung auf das zumindest eine Werkzeug 16 wirkenden Kraft durch wenigstens einen Kraftsensor 20. In Schritt c) erfolgt ein Prüfen, ob Abweichungen 22, 24 des wenigstens einen Kraftverlaufs 18 von zumindest einem vorbestimmten Sollverlauf 26 des mindestens einen Kraftverlaufs 18 vorliegen, wobei die Abweichungen 22, 24 jeweilige, in einem unbearbeiteten Segment 14 des Teilbereichs 12 enthaltene Materialfehler 28, 36 charakterisieren. Der Kraftverlauf 18, der Sollverlauf 26 sowie die Abweichungen 22, 24 sind in einem, in Fig. 3 gezeigten Diagramm exemplarisch dargestellt. In dem in Fig. 3 gezeigten Diagramm sind auf einer Ordinatenachse Kraftwerte in [N] und auf einer Abszissenachse Zeitwerte in [s] aufgetragen. Als die zumindest eine Kraft wird zumindest eine Schnittkraft herangezogen, welche während der spanenden Bearbeitung auf das zumindest eine Werkzeug 16 wirkt. Die Schnittkraft kann, je nachdem ob das Werkzeugs 16 als Fräswerkzeug oder als Drehwerkzeug ausgebildet ist, aus mehreren Schnittkraft-Komponenten zusammengesetzt sein, zu welchen eine Vorschubkraft, eine Passivkraft sowie, (beim Fräswerkzeug) eine Vorschubnormalkraft gehören können. In Fig. 3 sind die auf der Koordinatenachse aufgetragenen Kraftwerte auf die Passivkraft bezogen.

Die Abweichung 22 charakterisiert vorliegend den Materialfehler 28, wohingegen die Abweichung 24 den Materialfehler 36 charakterisiert. Der Materialfehler 28 ist vorliegend als Seigerung oder als Lunker ausgebildet und stellt damit einen relativ weichen Gefügebereich dar. Der Materialfehler 36 ist vorliegend als Karbidanhäufung ausgebildet und stellt einen im Vergleich zu dem Materialfehler 28 besonders harten Gefügebereich dar, wie aus dem Kraftverlauf 18 erkennbar ist.

Schritt c) des Verfahrens wird vorliegend während des Herstellens des zumindest einen Teilbereichs 12 aus dem Rohbauteil 10 gemäß Schritt b) durchgeführt. In Schritt c) wird der wenigstens eine Kraftverlauf 18 mit einer Mehrzahl an weiteren Kraftverläufen (welche aus Gründen der Übersichtlichkeit in Fig. 3 nicht weiter dargestellt sind) verglichen. Die weiteren Kraftverläufe charakterisieren jeweils eine spanende Bearbeitung einer Mehrzahl an weiteren, hier nicht weiter dargestellten Bauteilen. Durch das Vergleichen des wenigstens einen Kraftverlaufs 18 mit den weiteren Kraftverläufen können die Abweichungen 22, 24 in dem zumindest einen Teilbereich bewertet werden, wobei die weiteren Bauteile jeweils wenigstens einen im Vergleich zu den Materialfehlern 28, 36 gleichartigen, weiteren Materialfehler aufweisen, und wobei jeweilige weitere Abweichungen der weiteren Kraftverläufe von dem Sollverlauf 26 vorliegen. Die weiteren Kraftverläufe werden zeitlich vor dem wenigstens einen Kraftverlauf 18 ermittelt.

Die jeweiligen weiteren Kraftverläufe der Mehrzahl an weiteren Kraftverläufen können mit aus einer jeweiligen Metallographie der weiteren Bauteile der Mehrzahl an weiteren Bauteilen ermittelten Metallographie-Datensätzen und zusätzlich oder alternativ mit aus einer jeweiligen Niedriglastwechselermüdung der weiteren Bauteile der Mehrzahl an weiteren Bauteilen ermittelten Niedriglastwechselermüdungs-Datensätzen korreliert werden. Die jeweiligen weiteren Kraftverlaufe, die Metallographie-Datensätze und/oder die Niedriglastwechselermüdungs-Datensätze können in einer Materialfehler-Schnittkraft-Datenbank aufgenommen werden. Die Materialfehler-Schnittkraft-Datenbank kann für die Prüfung des Teilbereichs 12 und damit des Bauteils sowie zur Prüfung zukünftiger Bauteile, welche ebenso wie das Bauteil anhand des Verfahrens bzw. mittels der Prüfvorrichtung 32 geprüft werden können, herangezogen werden, um eine besonders aussagekräftige Prüfung und zuverlässige Detektion von Seigerungen oder anderen Materialfehlern zu ermöglichen. Anhand der Materialfehler-Schnittkraft-Datenbank, welche abgekürzt auch als Datenbank bezeichnet werden kann, kann eine Auftrittswahrscheinlichkeit von Fehlstellen (Materialfehlern) im Teilbereich 12 und/oder im gesamten Bauteil statistisch bewertet werden, wodurch besonders genaue Aussagen über eine Qualität des Teilbereichs 12 bzw. des Bauteils ermöglicht sind. Dadurch kann nicht spezifikationsgerechtes Material (Ausschuss) frühzeitig erkannt und separiert werden. Das Verfahren kann auch auf weitere spanende Bearbeitungsverfahren, zu welchen neben dem Fräsen auch beispielsweise Bohren und Räumen gehören, angewendet und dadurch die statistische Aussagefähigkeit noch weiter gesteigert werden. Hierzu kann die Datenbank bei der spanenden Bearbeitung durch die verschiedenen spanenden Bearbeitungsverfahren ermittelte, weitere Erfahrungsdatensätze umfassen.

Durch Vergleichen des wenigstens einen Kraftverlaufs 18 mit den weiteren Kraftverläufen kann eine jeweilige Position der Materialfehler 28, 36 in dem unbearbeiteten Segment 14 zumindest näherungsweise bestimmt werden.

Die Abweichungen 22, 24 in dem zumindest einen Teilbereich 12 werden unter Verwendung jeweiliger Kraftverlaufsgradienten des wenigstens einen Kraftverlaufs 18 und zusätzlich oder alternativ der weiteren Kraftverläufe bewertet. In Fig. 3 ist aus Gründen der Übersichtlichkeit lediglich ein dem wenigstens einen Kraftverlauf 18 zugeordneter Kraftverlaufsgradient 30 der jeweiligen Kraftverlaufsgradienten dargestellt.

Die jeweiligen Kraftverlaufsgradienten des Kraftverlaufs 18 und zusätzlich oder alternativ der weiteren Kraftverläufe sind vorliegend zeitabhängig, wie anhand des Kraftverlaufsgradienten 30 in Fig. 3 erkennbar ist.

Um die Abweichungen 22, 24 zu bewerten kann zumindest eine, durch schichtweisen Materialabtrag von dem Rohbauteil 10 bei der spanenden Bearbeitung bewirkte Steigungsänderung des zumindest einen Kraftverlaufsgradienten 30 über der Zeit herangezogen werden. Wird bei dem schichtweisen Materialabtrag beispielsweise der als Seigerung oder als Lunker ausgebildete Materialfehler 28 mehrmals überfahren, ergibt sich daraus der charakteristische Schnittkraftverlauf 16, welcher ortsgenau (ortsaufgelöst) bewertet und analysiert werden kann.

Die Prüfung in Schritt c) wird mittels eines künstlichen neuronalen Netzes, insbesondere durch ein Deep Learning-Verfahren durchgeführt. Das künstliche neuronale Netz enthält dabei jeweilige, die weiteren Kraftverläufe charakterisierende Datensätze als jeweilige Teile eines Erfahrungsdatensatzes, wodurch ein Einlernen bewirkt werden kann. Das künstliche neuronale Netz kann beispielsweise anhand der Materialfehler-Schnittkraft-Datenbank eingelernt werden. Somit bilden also die Datensätze, welche die weiteren Kraftverläufe charakterisieren, insgesamt einen Erfahrungsdatensatz. Die Materialfehler-Schnittkraft-Datenbank kann den Erfahrungsdatensatz umfassen.

In Fig. 2 ist stark vereinfacht eine Prüfvorrichtung 32 zum Prüfen des Teilbereich 12 dargestellt. Die Prüfvorrichtung 32 ist dazu eingerichtet beim Herstellen des Teilbereichs 12 aus dem Rohbauteil 10 durch spanende Bearbeitung des Rohbauteils 10 mittels des Werkzeugs 16 den wenigstens einen Kraftverlauf 18 der während der spanenden Bearbeitung auf das Werkzeug 16 wirkenden Kraft zu erfassen, indem die Prüfvorrichtung den Kraftverlauf 18 charakterisierende Kraftverlaufs-Sensorsignale von dem Kraftsensor 20 empfängt. Die Prüfvorrichtung 32 ist zudem dazu eingerichtet anhand der den wenigstens einen Kraftverlauf 18 charakterisierenden Kraftverlaufs-Sensorsignale zu prüfen, ob die Abweichungen 22, 24 des Kraftverlaufs 18 von dem vorbestimmten Sollverlauf 26 des Kraftverlaufs 18 vorliegt.

Die Vorschubkraft, die Passivkraft und die Vorschubnormalkraft können anhand des Kraftsensors 20 getrennt voneinander erfasst und als Zeitreihen beispielsweise mit einer Abtastrate im Bereich von 20 bis 40 kHz digitalisiert, also als die Kraftverlaufs-Sensorsignale an die Prüfvorrichtung 32 oder an eine Prozessoreinrichtung (nicht dargestellt) der Prüfvorrichtung 32 übermittelt werden.

Die Prüfvorrichtung 32 umfasst zudem eine Anzeigeeinrichtung 34 zum Anzeigen zumindest der wenigstens einen Abweichung 22, 24 des wenigstens einen Kraftverlaufs 18 von dem zumindest einen vorbestimmten Sollverlauf 26.

Durch das vorliegende Verfahren sowie durch die vorliegende Prüfvorrichtung 32 können insbesondere als Seigerung ausgebildete Fehler, wie im vorliegenden Beispiel der Materialfehler 28 detektiert werden. Dadurch kann auf eine aufwändige Ätzprüfung verzichtet werden.

Das Verfahren, bzw. die Prüfvorrichtung 32 ermöglichen es, ein bei der spanenden Bearbeitung zu zerspanendes Volumen des Rohbauteils 10 bzw. des Bauteils und damit auch des Teilbereichs 12 mittels dynamischer Schnittkraftmessung (bei welcher der entsprechende Kraftverlauf 18 ermittelt wird) hinsichtlich dem Auftreten beispielsweise der Seigerung (Materialfehler 28) oder hinsichtlich eines Auftretens einer Mehrzahl an Seigerungen zu bewerten, wobei beispielsweise eine Größe, eine Lage und zusätzlich oder alternativ ein Sprödverhalten der einzelnen Seigerungen bewertet werden kann.

Gegenüber einer aus dem Stand der Technik bekannten, reinen Oberflächenprüfung durch Ätzen (Ätzprüfung), bei welcher lediglich eine Prüfung eines sich über eine Tiefe von ca. 0,5 mm erstreckenden Prüfvolumens erfolgen kann, kann anhand des Verfahrens bzw. mittels der Prüfvorrichtung 32 ein deutlich größeres Volumen bewertet werden.

Bevorzugt kann aus einer Anzahl der Abweichungen 22, 24 und damit der Anzahl der Materialfehler 28, 36 zumindest eine Kennzahl ermittelt werden, welche als Qualitätskriterium für die Herstellung zukünftiger Bauteile, also beispielsweise zukünftiger Turbinenscheiben herangezogen werden kann. Diese Kennzahl kann beispielsweise eine Anzahl an Seigerungen je Volumenelement des Rohbauteils 10 und/oder des Teilbereichs 12 oder eine Größenverteilung der Seigerungen des Rohbauteils 10 und/oder des Teilbereichs 12 charakterisieren.

### Bezugszeichenliste:

- 10: Rohbauteil
- 12: Teilbereich
- 14: unbearbeitetes Segment
- 16: Werkzeug
- 18: Kraftverlauf
- 20: Kraftsensor
- 22: Abweichung
- 24: Abweichung
- 26: Sollverlauf
- 28: Materialfehler
- 30: Kraftverlaufsgradient
- 32: Prüfvorrichtung
- 34: Anzeigeeinrichtung
- 36: Materialfehler

## Patentansprüche

1. Verfahren zum Prüfen zumindest eines Teilbereichs (12) eines Bauteils, insbesondere eines Bauteils einer Strömungsmaschine, umfassend zumindest die Schritte:
a) Bereitstellen eines Rohbauteils (10);
b) Herstellen zumindest des Teilbereichs (12) aus dem Rohbauteil (10) durch spanende Bearbeitung des Rohbauteils (10) mittels zumindest eines Werkzeugs (16) und Erfassen wenigstens eines Kraftverlaufs (18) zumindest einer während der spanenden Bearbeitung auf das zumindest eine Werkzeug (16) wirkenden Kraft durch wenigstens einen Kraftsensor (20);
c) Prüfen, ob wenigstens eine Abweichung (22, 24) des wenigstens einen Kraftverlaufs (18) von zumindest einem vorbestimmten Sollverlauf (26) des mindestens einen Kraftverlaufs (18) vorliegt, wobei die wenigstens eine Abweichung (22, 24) zumindest einen in einem unbearbeiteten Segment (14) des Teilbereichs (12) enthaltenen Materialfehler (28, 36) charakterisiert,
wobei der wenigstens eine Kraftverlauf (18) mit zumindest einem weiteren Kraftverlauf, welcher eine spanende Bearbeitung zumindest eines weiteren Bauteils charakterisiert, verglichen und dadurch die wenigstens eine Abweichung (22, 24) in dem zumindest einen Teilbereich bewertet wird,
**dadurch gekennzeichnet, dass**
das zumindest eine weitere Bauteil wenigstens einen im Vergleich zu dem zumindest einen Materialfehler (28, 36) gleichartigen, weiteren Materialfehler aufweist, und wobei wenigstens eine weitere Abweichung des zumindest einen weiteren Kraftverlaufs von dem zumindest einen vorbestimmten Sollverlauf (26) vorliegt und wobei durch Vergleichen des wenigstens einen Kraftverlaufs (18) mit dem zumindest einen weiteren Kraftverlauf eine Position des zumindest einen Materialfehlers (28, 36) in dem unbearbeiteten Segment (14) zumindest näherungsweise bestimmt wird, wonach bestimmt wird, ob sich der Materialfehler beim bestimmungsgemäßen Gebrauch des Bauteils in einem hochbelasteten Bauteilbereich oder in einem niedrigbelasteten Bauteilbereich befindet.

2. Verfahren nach Anspruch 1,
**dadurch gekennzeichnet, dass**
Schritt c) während des Herstellens des zumindest einen Teilbereichs (12) aus dem Rohbauteil (10) gemäß Schritt b) durchgeführt wird.

3. Verfahren nach Anspruch 1 oder 2,
**dadurch gekennzeichnet, dass**
die wenigstens eine Abweichung (22, 24) in dem zumindest einen Teilbereich (12) unter Verwendung zumindest eines Kraftverlaufsgradienten (30) des wenigstens einen Kraftverlaufs und/oder des zumindest einen weiteren Kraftverlaufs bewertet wird.

4. Verfahren nach Anspruch 3,
**dadurch gekennzeichnet, dass**
der zumindest eine Kraftverlaufsgradient (30) des wenigstens einen Kraftverlaufs (18) und/oder des zumindest einen weiteren Kraftverlaufs zeitabhängig und/oder ortsabhängig ist.

5. Verfahren nach Anspruch 3 oder 4,
**dadurch gekennzeichnet, dass**
zumindest eine, durch schichtweisen Materialabtrag von dem Rohbauteil (10) bei der spanenden Bearbeitung bewirkte Steigungsänderung des zumindest einen Kraftverlaufsgradienten (30) herangezogen wird, um die wenigstens eine Abweichung (22, 24) zu bewerten.

6. Verfahren nach einem der vorhergehenden Ansprüche,
**dadurch gekennzeichnet, dass**
der zumindest eine weitere Kraftverlauf zeitlich vor dem wenigstens einen Kraftverlauf (18) ermittelt wird.

7. Verfahren nach einem der vorhergehenden Ansprüche,
**dadurch gekennzeichnet, dass**
die Prüfung in Schritt c) mittels eines künstlichen neuronalen Netzes, insbesondere durch ein Deep Learning-Verfahren durchgeführt wird.

8. Verfahren nach einem der vorhergehenden Ansprüche,
**dadurch gekennzeichnet, dass**
als die zumindest eine Kraft zumindest eine Schnittkraft herangezogen wird, welche während der spanenden Bearbeitung auf das zumindest eine Werkzeug (16) wirkt.

9. Verfahren nach einem der vorhergehenden Ansprüche, **dadurch gekennzeichnet, dass** als das zumindest eine Werkzeug (16) ein Fräswerkzeug oder ein Drehwerkzeug verwendet wird.

10. Prüfvorrichtung (32) zum Prüfen zumindest eines Teilbereich (12) eines Bauteils, insbesondere eines Bauteils einer Strömungsmaschine, gemäß des Verfahrens nach einem der Ansprüche 1-9, welche dazu eingerichtet ist,
- bei einem Herstellen des zumindest einen Teilbereichs aus einem Rohbauteil (10) durch spanende Bearbeitung des Rohbauteils (10) mittels des zumindest einen Werkzeugs (16) wenigstens einen Kraftverlauf (18) zumindest einer während der spanenden Bearbeitung auf das zumindest eine Werkzeug (16) wirkenden Kraft charakterisierende Kraftverlaufs-Sensorsignale von dem wenigstens einen Kraftsensor (20) zu empfangen, und
- anhand der den wenigstens einen Kraftverlauf (18) charakterisierenden Kraftverlaufs-Sensorsignale zu prüfen, ob wenigstens eine Abweichung (22, 24) des wenigstens einen Kraftverlaufs (18) von zumindest einem vorbestimmten Sollverlauf (26) des mindestens einen Kraftverlaufs (18) vorliegt, wobei die wenigstens eine Abweichung (22, 24) zumindest einen in einem unbearbeiteten Segment (14) des Teilbereichs (12) enthaltenen Materialfehler (28, 36) charakterisiert, der wenigstens eine Kraftverlauf (18) mit zumindest einem weiteren Kraftverlauf, welcher eine spanende Bearbeitung zumindest eines weiteren Bauteils charakterisiert, verglichen und dadurch die wenigstens eine Abweichung (22, 24) in dem zumindest einen Teilbereich bewertet wird, wobei das zumindest eine weitere Bauteil wenigstens einen im Vergleich zu dem zumindest einen Materialfehler (28, 36) gleichartigen, weiteren Materialfehler aufweist, und wobei wenigstens eine weitere Abweichung des zumindest einen weiteren Kraftverlaufs von dem zumindest einen vorbestimmten Sollverlauf (26) vorliegt und wobei durch Vergleichen des wenigstens einen Kraftverlaufs (18) mit dem zumindest einen weiteren Kraftverlauf eine Position des zumindest einen Materialfehlers (28, 36) in dem unbearbeiteten Segment (14) zumindest näherungsweise bestimmt wird, wonach bestimmt wird, ob sich der Materialfehler beim bestimmungsgemäßen Gebrauch des Bauteils in einem hochbelasteten Bauteilbereich oder in einem niedrigbelasteten Bauteilbereich befindet.

11. Prüfvorrichtung (32) nach Anspruch 10,
**dadurch gekennzeichnet, dass**
diese eine Anzeigeeinrichtung (34) zum Anzeigen zumindest der wenigstens einen Abweichung (22, 24) des wenigstens einen Kraftverlaufs (18) von dem zumindest einen vorbestimmten Sollverlauf (26) umfasst.

## Claims

1. Method for testing at least one portion (12) of a component, in particular a component of a turbomachine, comprising at least the following steps:
a) providing a raw component (10);
b) producing at least the portion (12) from the raw component (10) by machining the raw component (10) using at least one tool (16) and detecting, by means of at least one force sensor (20), at least one force profile (18) of at least one force acting on the at least one tool (16) during the machining process;
c) testing whether at least one deviation (22, 24) of the at least one force profile (18) from at least one predetermined target profile (26) of the at least one force profile (18) is present, the at least one deviation (22, 24) characterizing at least one material defect (28, 36) contained in an unmachined segment (14) of the portion (12), the at least one force profile (18) being compared with at least one further force profile that characterizes a machining process of at least one further component, and the at least one deviation (22, 24) in the at least one portion being thereby evaluated,
**characterized in that**
the at least one further component has at least one further material defect similar to the at least one material defect (28, 36), and at least one further deviation of the at least one further force profile from the at least one predetermined target profile (26) being present, and, by comparing the at least one force profile (18) with the at least one further force profile, a position of the at least one material defect (28, 36) in the unmachined segment (14) being determined at least approximately, according to which it is determined whether, when the component is used as intended, the material defect is in a component region subject to high loads or in a component region subject to low loads.

2. Method according to claim 1,
**characterized in that**
step c) is carried out during the production of the at least one portion (12) from the raw component (10) according to step b).

3. Method according to either claim 1 or claim 2,
**characterized in that**
the at least one deviation (22, 24) in the at least one portion (12) is evaluated using at least one force profile gradient (30) of the at least one force profile and/or of the at least one further force profile.

4. Method according to claim 3,
**characterized in that**
the at least one force profile gradient (30) of the at least one force profile (18) and/or of the at least one further force profile is time-dependent and/or location-dependent.

5. Method according to either claim 3 or claim 4,
**characterized in that**
at least one gradient change of the at least one force profile gradient (30), caused by layer-by-layer material removal from the raw component (10) during the machining process, is used to evaluate the at least one deviation (22, 24).

6. Method according to any of the preceding claims,
**characterized in that**
the at least one further force profile is determined chronologically before the at least one force profile (18).

7. Method according to any of the preceding claims,
**characterized in that**
the test in step c) is carried out by means of an artificial neural network, in particular by a deep learning method.

8. Method according to any of the preceding claims,
**characterized in that**
at least one cutting force is used as the at least one force, which cutting force acts on the at least one tool (16) during the machining process.

9. Method according to any of the preceding claims,
**characterized in that**
a milling tool or a turning tool is used as the at least one tool (16).

10. Testing device (32) for testing at least one portion (12) of a component, in particular a component of a turbomachine, using the method according to any of claims 1-9, which device is designed to,
- when the at least one portion is being produced from a raw component (10) by machining the raw component (10) using the at least one tool (16), receive force profile sensor signals from the at least one force sensor (20), which force profile sensor signals characterize at least one force profile (18) of at least one force acting on the at least one tool (16) during the machining process, and
- test, on the basis of the force profile sensor signals characterizing the at least one force profile (18), whether at least one deviation (22, 24) of the at least one force profile (18) from at least one predetermined target profile (26) of the at least one force profile (18) is present, wherein the at least one deviation (22, 24) characterizes at least one material defect (28, 36) contained in an unmachined segment (14) of the portion (12), the at least one force profile (18) is compared with at least one further force profile that characterizes a machining process of at least one further component, and the at least one deviation (22, 24) in the at least one portion is thereby evaluated, wherein the at least one further component has at least one further material defect similar to the at least one material defect (28, 36), and wherein at least one further deviation of the at least one further force profile from the at least one predetermined target profile (26) is present and wherein, by comparing the at least one force profile (18) with the at least one further force profile, a position of the at least one material defect (28, 36) in the unmachined segment (14) is determined at least approximately, according to which it is determined whether, when the component is used as intended, the material defect is in a component region subject to high loads or in a component region subject to low loads.

11. Testing device (32) according to claim 10,
**characterized in that**
it comprises a display device (34) for displaying at least the at least one deviation (22, 24) of the at least one force profile (18) from the at least one predetermined target profile (26).

## Revendications

1. Procédé pour le contrôle d'au moins une section (12) d'un composant, en particulier d'un composant d'une turbomachine, comprenant au moins les étapes de :
a) fourniture d'un composant brut (10) ;
b) fabrication d'au moins la section (12) à partir du composant brut (10) par usinage par enlèvement de copeaux du composant brut (10) au moyen d'au moins un outil (16), et détermination, par au moins un capteur de force (20), d'au moins une courbe de force (18) d'au moins une force agissant sur l'au moins un outil (16) durant l'usinage par enlèvement de copeaux ;
c) contrôle du fait de savoir s'il existe au moins un écart (22, 24) de l'au moins une courbe de force (18) par rapport à au moins une courbe de consigne (26) prédéterminée de l'au moins une courbe de force (18), l'au moins un écart (22, 24) caractérisant au moins un défaut de matériau (28, 36) contenu dans un segment non traité (14) de la section (12), l'au moins une courbe de force (18) étant comparée à au moins une autre courbe de force, laquelle caractérise un usinage par enlèvement de copeaux d'au moins un autre composant, et l'au moins un écart (22, 24) dans l'au moins une section étant ainsi évalué,
**caractérisé en ce que**
l'au moins un autre composant présente au moins un autre défaut de matériau similaire par rapport à l'au moins un défaut de matériau (28, 36), et au moins un autre écart de l'au moins une autre courbe de force par rapport à l'au moins une courbe de consigne (26) prédéterminée existant, et, en comparant l'au moins une courbe de force (18) à l'au moins une autre courbe de force, une position de l'au moins un défaut de matériau (28, 36) dans le segment non traité (14) étant au moins approximativement déterminée, à la suite de quoi il est déterminé si le défaut de matériau se trouve, lors de l'utilisation conforme du composant, dans une zone de composant soumise à des contraintes élevées ou dans une zone de composant soumise à des contraintes faibles.

2. Procédé selon la revendication 1,
**caractérisé en ce que**
l'étape c) est exécutée pendant la fabrication de l'au moins une section (12) à partir du composant brut (10) conformément à l'étape b).

3. Procédé selon la revendication 1 ou 2,
**caractérisé en ce que**
l'au moins un écart (22, 24) dans l'au moins une section (12) est évalué à l'aide d'au moins un gradient de courbe de force (30) de l'au moins une courbe de force et/ou de l'au moins une autre courbe de force.

4. Procédé selon la revendication 3,
**caractérisé en ce que**
l'au moins un gradient de courbe de force (30) de l'au moins une courbe de force (18) et/ou de l'au moins une autre courbe de force dépend du temps et/ou dépend de l'emplacement.

5. Procédé selon la revendication 3 ou 4,
**caractérisé en ce que**
au moins un changement de pente, causé par l'enlèvement de matériau en couches du composant brut (10) lors de l'usinage par enlèvement de copeaux, de l'au moins un gradient de courbe de force (30) est utilisé pour évaluer l'au moins un écart (22, 24).

6. Procédé selon l'une des revendications précédentes,
**caractérisé en ce que**
l'au moins une autre courbe de force est déterminée temporellement avant l'au moins une courbe de force (18).

7. Procédé selon l'une des revendications précédentes,
**caractérisé en ce que**
le contrôle à l'étape c) est exécuté au moyen d'un réseau de neurones artificiels, en particulier par un procédé d'apprentissage en profondeur.

8. Procédé selon l'une des revendications précédentes,
**caractérisé en ce que**
au moins une force de coupe est utilisée en tant que l'au moins une force, laquelle agit sur l'au moins un outil (16) pendant l'usinage par enlèvement de copeaux.

9. Procédé selon l'une des revendications précédentes,
**caractérisé en ce que**
une fraiseuse ou un outil de tournage est utilisé en tant que l'au moins un outil (16).

10. Dispositif de contrôle (32) pour le contrôle d'au moins une section (12) d'un composant, en particulier d'un composant d'une turbomachine, conformément au procédé selon l'une des revendications 1 à 9, lequel dispositif est conçu pour
- recevoir, lors de la fabrication de l'au moins une section à partir d'un composant brut (10) par usinage par enlèvement de copeaux du composant brut (10) au moyen de l'au moins un outil (16), des signaux de capteur de courbe de force caractérisant au moins une courbe de force (18) d'au moins une force agissant, pendant l'usinage par enlèvement de copeaux, sur l'au moins un outil (16), lesquels signaux proviennent de l'au moins un capteur de force (20), et
- contrôler, à l'aide des signaux de capteur de courbe de force caractérisant l'au moins une courbe de force (18), s'il existe au moins un écart (22, 24) de l'au moins une courbe de force (18) par rapport à au moins une courbe de consigne (26) prédéterminée de l'au moins une courbe de force (18), l'au moins un écart (22, 24) caractérisant au moins un défaut de matériau (28, 36) contenu dans un segment non traité (14) de la section (12), l'au moins une courbe de force (18) étant comparée à au moins une autre courbe de force, laquelle caractérise un usinage par enlèvement de copeaux d'au moins un autre composant, et l'au moins un écart (22, 24) dans l'au moins une section étant ainsi évalué, l'au moins un autre composant présentant au moins un autre défaut de matériau similaire par rapport à l'au moins un défaut de matériau (28, 36), et au moins un autre écart de l'au moins une autre courbe de force par rapport à l'au moins une courbe de consigne (26) prédéterminée existant, et, en comparant l'au moins une courbe de force (18) à l'au moins une autre courbe de force, une position de l'au moins un défaut de matériau (28, 36) dans le segment non traité (14) étant au moins approximativement déterminée, à la suite de quoi il est déterminé si le défaut de matériau se trouve, lors de l'utilisation conforme du composant, dans une zone de composant soumise à des contraintes élevées ou dans une zone de composant soumise à des contraintes faibles.

11. Dispositif de contrôle (32) selon la revendication 10,
**caractérisé en ce que**
celui-ci comprend un moyen d'affichage (34) pour l'affichage d'au moins l'au moins un écart (22, 24) de l'au moins une courbe de force (18) par rapport à l'au moins une courbe de consigne (26) prédéterminée.
